# EUROPEAN PATENT APPLICATION

(11) **EP 4 412 228 A1**
(43) Date of publication of application: **07.08.2024**
(21) Application number: 23155160.7
(22) Date of filing: 06.02.2023
(51) Int. Cl.: H04N 21/442, H04N 21/4405, H04N 21/4385, H04N 21/426, H04N 21/4623, H04N 21/24, H04N 21/266, H04N 21/6334, H04N 21/6377, H04N 21/835

(54) **CONDITIONAL ACCESS SYSTEM BASED AUDIENCE MEASUREMENT**

(71) Applicant: Nagravision Sàrl, 1033 Cheseaux-sur-Lausanne (CH)
(72) Inventor: FERNANDEZ, Carlos, 1033 Cheseaux-sur-Lausanne (CH); BIEBER, Yann, 1033 Cheseaux-sur-Lausanne (CH)
(74) Representative: Mewburn Ellis LLP

(57) **Abstract**

The present disclosure relates to conditional access systems. In particular, the present disclosure relates to audience measurement in a conditional access system. Accordingly, there is provided a method (300) for audience related analytics measurements in a media consumption environment (100) comprising a media provisioning system (102) and a media playback device (104), the method comprising the steps of receiving (302), by the media playback device (104), encrypted and/or scrambled media data from a media provisioning system (102), receiving (304), by the media playback device (104), key data comprising at least one decryption/descrambling key for decrypting and/or descrambling the media data, wherein the media playback device (104) is processing the key data to obtain the decryption/descrambling key, and wherein the key data is indicative of a particular media data and/or a particular consumption time of media data or a particular media data, generating (306) analytics data (106) related to the processing of the data key on the media playback device (104), transmitting (308) at least part of the analytics data to the media provisioning system (102).

## Description

### TECHNICAL FIELD

The present disclosure relates to conditional access systems. In particular, the present disclosure relates to audience measurement in a conditional access system. Further in particular, the present disclosure relates to a method for audience related analytics measurements in a media consumption environment, a media playback device, a media provisioning system, media data consumption environment, a computer program product, and a computer-readable storage medium.

### BACKGROUND

the present application is related to content delivery over a content delivery network or a content distribution network from a content provider to an end user. The content provider is offering content for the consumption by the end users, which content or data may be readily available through the content delivery network from data centres arranged as part of the content delivery network and storing the content to be consumed by the end users. Different types of content consumption exist, e.g., a content consumption may be free of charge or alternatively may be behind a paywall where the end user is required to pay in order to be able to receive and/or view the content. In case of paid content, the end user may pay directly for the provisioning of a particular content, e.g., in a pay per view scheme, or they may have access to a larger variety of content, e.g., when subscribing to a particular service.

In every case, and even in case of free content, the content provider and/or the content delivery network operator may be particularly interested in data relating to the content provisioning and/or consumption. E.g., such data may indicate what content has been consumed at what time and to what extent by a particular end user or a certain end user group. The data in turn may be used for accounting and/or invoicing purposes, e.g., for charging an agreed amount for the consumption of a particular content from a particular user. Alternatively, or additionally, the data may be used to review the operation of the content delivery network from a functional standpoint, e.g., whether the existing content delivery network is sufficient for the demands of the end users. Such data may generally be referred to as audience measurement.

In order to be able to use the data gathered by the audience measurement for individual accounting and invoicing purposes for a particular user, it is beneficial to implement the audience measurement as close to the end user as possible. E.g., audience measurement for cable or IPTV conditional access systems (CAS) deployments may implement the audience measurement at the end user side in the set-top box (STB), in particular an application running on the set-top box. In other words, the data collection agent may be integrated within an application running in the set-top box. Arranging the data collection within the set-top box may allow the most precise collection of data, in particular since the set-top box itself is generally used for outputting a certain content to reproduction equipment like a TV or stereo. As such, acquiring data on the set-top box allows data acquisition with the highest accuracy and reliability.

A set-top box generally is a multipurpose computing system, which is arranged for data reception, e.g., data delivered by the content network, data processing, e.g., decryption of delivered data, and data provisioning, e.g., output of the consumable data in a suitable technical format so that reproduction equipment may adequately present the data to the end user. E.g., a set-top box may receive encrypted and/or scrambled data, may perform a decryption and or descrambling and may output the decrypted/the scrambled data via e.g., an HDMI port to a TV or protector in the case of a video signal. Due to the nature of the multipurpose computing system, a set top box generally is arranged to run a vied variety of different applications, depending amongst others on the delivered content and the specific technical implementation of the set-top box.

Different manufacturers of set-top boxes may use different embodiment of the multipurpose computing system, may run different operating systems on the respective set-top box hardware or require different applications specific to a particular content delivery network. It follows that a particular content delivery network needs to be compatible with a wide variety of different set-top boxes from different manufacturers running multiple applications to access a plurality of content delivery networks on demand by the end user. In such a scenario, audience measurement may be implemented by an additional application running on the set-top box. It follows, that such an application needs to be compatible with the respective set-top boxes, their operating systems and content delivery network access applications.

This integration in a set-top box environment may be problematic as it engages the set-top box application or the middleware provider(s) and their applications, which may result in compatibility issues, e.g., for large fleets of deployed legacy set-top boxes. E.g., some middleware providers may no longer available or legacy set-top boxes may no longer supported. Further, in particular older set-top box platforms may have capacity limitations, i.e., limitations running a particular audience measurement application in addition to the application(s) required or consuming the content, which may result in a termination of the audience measurement application or may prevent the audience measurement application from running in the first place.

In addition, the quality of the collected and transmitted data may depend on the quality of the integration of the data collection agent of the audience measurement in a potentially heterogeneous fleet of set-top box devices and the integrity of their whole software stack.

Thus, there may be a need for improved collection of data for audience measurements

Further, there may be a need for a platform independent and/or application independent collection of data for audience measurements.

### SUMMARY

At least one such need may be met by the subject-matter of the independent claims. Preferred embodiments are provided in the dependent claims and are explained in detail in the following description.

The present invention relates to measurement of media consumption in a conditional access system.

According to a first aspect of the disclosure, there is provided a method for audience related analytics measurements in a media consumption environment comprising a media provisioning system and a media playback device, the method comprising the steps of receiving, by the media playback device, encrypted and/or scrambled media data from a media provisioning system, receiving, by the media playback device, key data comprising at least one decryption/descrambling key for decrypting and/or descrambling the media data, wherein the media playback device is processing the key data to obtain the decryption/descrambling key, and wherein the key data is indicative of a particular media data and/or a particular consumption time of media data or a particular media data, generating analytics data related to the processing of the key data on the media playback device, transmitting at least part of the analytics data to the media provisioning system.

According to a second aspect of the disclosure, there is provided a media playback device, comprising a communication element and a processing element, wherein the communication element is adapted to receive encrypted and/or scrambled media data from a media provisioning system, wherein the communication element is adapted to receive key data comprising at least one decryption/descrambling key for decrypting and/or descrambling the media data, wherein the key data is indicative of a particular media data and/or a particular consumption time of a particular media data, wherein the processing element is adapted to process the key data to obtain the decryption/descrambling key, wherein the processing element is adapted to generate analytics data related to the processing of the key data on the media playback device and wherein the communication element is adapted to transmit at least part of the analytics data to the media provisioning system.

According to a third aspect of the disclosure, there is provided a media playback device, comprising a communication element adapted to receive encrypted and/or scrambled media data, receive key data, and/or transmit analytics data, and a processing element adapted to carry out the method according to the present disclosure.

According to a fourth aspect of the disclosure, there is provided a media provisioning system, comprising a processing element, and a communication element adapted for communication with a media playback device according to the present disclosure, wherein the media provisioning system is adapted to receive analytics data comprising information indicative of at least one particular decryption/descrambling key used.

According to a fifth aspect of the disclosure, there is provided a media data consumption environment, comprising a media playback device according to the present disclosure, and a media provisioning system according to the present disclosure.

According to a sixth aspect of the disclosure, there is provided a computer program product or a computer-readable storage medium comprising instructions which, when executed by a processing element, cause the computer to carry out the method according to the present disclosure.

The in the context of the present disclosure, audience measurement is integrated into the fundamental operational processes of the set-top box. Specifically, the present disclosure employs existing content delivery network messaging required for the general operation of the content delivery network and reuse said data for audience measurement. E.g., messages used for decryption and/or descrambling of the received content to be reproduced may double as an indication of consumed data. This approach assumes that decryption and/or the scrambling of data corresponds to the consumption of said data and reporting thereon allows conducting appropriate audience measurements.

The present disclosure proposes to use the conditional access system itself to provide audience measurement reports for a particular deployed set-top box in a transparent and secure manner. In this regard, the present disclosure uses an already implemented broadcast/multicast network communicating between a conditional access system the head end and the set-top box, specifically the conditional access system client running on the set-top box, to report on the content consumption of a particular set-top box/end-user. Content may be provided by a media provisioning system to a consumer or end user. Content consumption may in particular be the viewing of a particular program by a consumer at a particular time. A media provisioning system in the context of the present disclosure may be any system involved in the broadcast/distribution of the media data or content data, e.g., a sender, a backend, a distributor, a storage provider, a content owner, or the like.

In the context of the present disclosure, entitlement control messages are used to identify consumed content. Regularly, entitlement control messages (ECM) provide key data, e.g., a decryption key or descrambling key to decrypt/descramble a particular service, e.g., data associated with said service. Typically, entitlement control messages are provided together with the data received for a particular protected service or content. Key data within the entitlement control message is usually changed frequently so to minimize the impact in case of fraudulent redistribution of decryption/descrambling key data. Access to the key data in an entitlement control message itself may be controlled/regulated by entitlement management messages (EMM).

Additionally, the audience measurement may be controlled by particular data embedded in the entitlement control message received by a particular set-top box. E.g., for the consumption of a particular content, audience measurement may be specifically activated.

A secure conditional access system client that is executed on the set-top box may perform the decryption of a particular entitlement control message linked to a particular service or content data. Such a decryption, which can be seen as sufficient to enable the consumption of the content, may in turn act as an indicator of the actual consumption of the respective data. In other words, it can be deferred that the decryption of a particular entitlement control message subsequently results in the reproduction and consumption of the content. The client running on the set-top box may analyse in particular in real time said behaviour, may collect and securely store said data for forwarding to the content provider and/or the content delivery network operator.

The collected data may be periodically sent to the back end or head end of the conditional access system to be analysed. The time when the collected data is sent back may depend, amongst other things, on the respective data consumed. E.g., for a particular life sports program, it may be of interest to determine content consumption substantially in real time, so that the collected data is sent in regular intervals shortly after consumption of a particular part of the program. Alternatively, or additionally, the collected data may be sent in larger intervals, e.g., once and day, once a week or once a month, in case such intervals are sufficient for e.g., reporting, accounting and invoicing purposes. In other words, the audience measurement may be reported to the conditional access system head end as part of the periodic license renewal process. The report may embed a cryptographic proof of content consumption based on decrypted entitlement control messages. The conditional access system head end may subsequently analyse and post-process the data to compile audience measurement reports and/or export the raw data to TV analytics dedicated systems for further processing.

Audience measurement scheduling and activation/deactivation may be performed on demand by the operator of the content delivery network using a dedicated application programming interface in the conditional access system head end (comparable to e.g., existing watermarking/fingerprinting schedule APIs). This allows to activate targeted data collection, e.g., per service (e.g., a live channel) and/or during a given time period (e.g., a specific live sports event). The resulting data may thus be fully relevant to the targeted electronic program guide event and may avoid irrelevant data collection and transmission. The activation may be transmitted to the complete set-top box fleet via the broadcast/multicast network secured embedded within the conditional access system entitlement control messages.

To validate the reported proof of consumption, the conditional access system head end may perform a hash operation on the entitlement control messages in order to provide a simple means for long-term storage of entitlement control message information. Each entitlement control message hash produced during the scheduled data collection may be linked with an associated entitlement control message timestamp, so that it is recorded which entitlement control message hash has been valid at which time for which program.

The data collection may thus be performed by the conditional access system secure client engaged in entitlement control message decryption which is required to access the content protecting control word. In other words, the granularity of the audience measurement may be directly related to the period where the cryptographic key of a particular entitlement control message is valid. Thus, audience measurement may be limited to the time period notified via entitlement control messages and once it determined may be protected via secure storage within the set-top box.

In order to reduce the amount of data required to be transferred to the conditional access system head end for analysis, it may not be required to transmit each generated entitlement control message hash back to the head end. Considering a particular implementation of the back channel from the conditional access system set-top box to the head end, sufficient bandwidth to transmit each generated entitlement control message hash may not even be available. Thus, the present disclosure proposes to employ a hash tree structure for reporting audience measurement based on decrypted entitlement control messages. In other words, individual entitlement control message hashes are arranged as part of a hash tree, and only a particular upper-level hash of a tree branch, in particular the top hash or end hash, is transmitted to the conditional access system head end. With knowledge of the possible hashes of entitlement control messages, the back end is then able to determine which entitlement control message hashes are part of the hash tree and thus deduce which entitlement control messages have been employed for a particular content consumption. As mentioned before, a consumption of a particular part of content is deduced from the decryption of a particular entitlement control message.

The real time analysis performed as follows. A hash of each new valid and successive entitlement control message is used/added as a leaf of a consumption hash tree, e.g., a Merkle tree. A plurality of hash values, e.g., two hash values, are used to generate a further hash value of the hash tree. Thereby, a substantial number of individual hash values, e.g., one hash value for each ECM used for the consumption of data, can be reduced by successively hashing and combining said plurality of hash values, e.g., two hash values. By such a continued combination of hash values, a hash tree is built, resulting in a single top hash value. With the knowledge of said top hash value and the knowledge on the possible ECMs/the respective hash values of the possible ECMs, a recipient of the top hash value may compute a complete list of used ECMs. From this complete list of used ECMs, the consumption may be determined. In other words, it can be assumed that all ECMs/hash values of ECMs that make of the hash tree resulting in a particular top hash value have been used for the decryption of content and thus it may be deduced that the content related to said number of ECMs has indeed be consumed by the user.

The data reporting by the conditional access system client on the set-top box to the conditional access system head end may be sent together with a standard, periodic license renewal request. The additional data sent may be protected by the conditional access system to avoids data tampering. The reported data may in particular include the following:

Start and end date-time of the consumption on a particular set-top box.

Entitlement control message start and end timestamps of the content consumed. This may allow to analyse a delayed consumption, e.g., when the content is recorded, rather than directly viewed.

The top hash of the hash tree may be seen as proof of content consumption.

The operator may either receive data analysed by the conditional access system head end if data post-processing components are available, or the raw data may be exported to existing TV analytics / audience measurement tools existing in an operator's back-end system.

The present disclosure thus provides instant audience measurement campaign activation in an efficient manner, a zero-touch set-top box application/middleware, and data collection and reporting secured by the conditional access system including cryptographic proof of consumption.

The cryptographic proof of consumption could be adapted for the over-the-top market by working on the over-the-top segments directly instead of the entitlement control messages.

According to an embodiment of the present disclosure, the key data may comprise the at least one decryption/descrambling key and identification data.

The decryption/descrambling key may be used for decryption/descrambling of the data provided by the media provisioning system/content delivery network to obtain content data that may subsequently be reproduced for consumption by the end user. In other words, the decryption/descrambling key is mandatorily required in order to consume the content. Thus, once the decryption/descrambling key is available, it may be deduced that this results in the consumption of that part of the content for which the decryption/descrambling key is required. Put another way, the present disclosure assumes that once the received key data is processed and the decryption/descrambling key contained in the key data is available, this corresponds to the consumption of the related content.

According to a further embodiment of the present disclosure, the analytics data may comprise hash information related to at least one particular decryption/descrambling key, or the analytics data may comprise hash information related to a plurality of particular decryption/descrambling keys.

According to a further embodiment of the present disclosure, wherein each of the plurality of particular decryption/descrambling keys may comprise individual hash information, and wherein at least one further hash information may be determined from the hash information of at least some of the plurality of particular decryption/descrambling keys, in particular two particular decryption/descrambling keys.

According to a further embodiment of the present disclosure, the transmitted analytics data may comprise information indicative of the at least one further hash information.

According to a further embodiment of the present disclosure, the transmitted analytics data may comprise information indicative of at least one transmitted hash information, and the at least one hash information may be generated from a plurality of, in particular successive, hash operations on a plurality of particular key data and/or hash information generated from the plurality of particular key data.

A hash function may be seen as any function that may be used to map data of an arbitrary size to data having a fixed size of value. E.g., the hash function may map a decryption/descrambling key provided by an entitlement control message to a certain hash value. A hash value may have a reduced size compared to decryption/descrambling key of the entitlement control message. In other words, using a hash function on the decryption/descrambling key produces a hash value of reduced size while cryptographically assuring that the decryption/descrambling key was available, i.e., decrypted from the entitlement control message. A certain hash value of a decryption/descrambling key may thus act as proof of the decryption of the entitlement control message and thus of the consumption of the content for which the decryption/descrambling key is required.

A plurality of hash values in turn may be used in a further hash function, e.g., generating a higher order hash value from two or more lower order hash values. A system receiving the higher order hash value and having knowledge about the lower order hash values may deduce that for the generation of the higher order hash value, the two or more lower order hash values must have been available. This in turn allows deducing that all entitlement control messages associated with the lower order hash values were decrypted and thus the content associated with those particular entitlement control messages was consumed by the end user.

Transmitting a higher order hash value thus allows a further reduction in transmitted data size, as it is not required to transmit a plurality of lower order hash values but only potentially a single higher order hash value. In other words, if the transmitted analytics data comprises a single higher order hash value, the transmission of the single higher order hash value is sufficient to determine a plurality of lower order hash values and therefrom a plurality of decrypted entitlement control messages, which may be equated with the consumption of the respective content associated with the plurality of entitlement control messages. The transmission of a single higher order hash value may thus allow the determination that a particular end user has consumed content corresponding to a plurality of entitlement control messages.

It may not be necessary to transmit or use each consecutive decryption key or associated hash value individually, but it may be sufficient to only transmit a subset, e.g., every second, every fifth or every 10^{th} of the consecutive decryption key or associated hash value or use it in the generation of an end hash. E.g., in case only every 10^{th} decryption key/associated hash value is used it is deducible from the particular occurrence of the 10^{th}, 20^{th}, 30^{th} key/value that all intermediate keys/values must have been used as well. In case not all keys would have been used, a particular 10^{th}, 20^{th}, 30^{th} key/value would not correspond to the particular value of a consecutive consumption. In other words, in case for example the 21^{st} key/value would not have been decrypted/calculated, the transmitted 30^{th} key/value would actually correspond to the 31^{st} key/value in the consecutive chain since the 21^{st} key/value was omitted. In this regard, it may be sufficient to determine the first and last key/value of a particular program defined by the total number of decryption keys, i.e., decrypted entitlement control messages containing to said program, and transmit an end hash of the first and last key/value. In case said end hash corresponds to the expected end hash in a scenario where the end user has consumed the complete program, that determination may be done by the calculation of an end hast based on only two hash values, the hash values associated with first and last decrypted entitlement control message.

According to a further embodiment of the present disclosure, the transmitted analytics data may comprise information indicative of at least one transmitted hash information, wherein the transmitted hash information is end hash information of a hash chain, hash list or hash tree, and the nodes of the hash chain, hash list or hash tree may be information out of the group consisting of information indicative of particular key data, hash information indicative of particular key data and hash information indicative of particular hash information of a particular plurality of key data.

Transmitting only a single end hash value of a hash chain, hash list or hash tree potentially allows the determination that a particular user has consumed content data corresponding to a plurality, possibly a substantial number, of decrypted entitlement control messages. The transmission of a single end hash thus provides in addition to granular media consumption data when analysed for the contained lower order hash values, a significant data reduction. Depending on the specific embodiment of the hash chain, hash list or hash tree, the transmission of a single hash end value may transmit information about a number of individual entitlement control messages that would require a significantly higher amount of transmitted data if transmitted individually.

According to a further embodiment of the present disclosure, the analytics data related to the consumption of the media data comprises at least one type of information out of the group of information consisting of media data, media type data, consumed media data, consumed media type data, start-time of consumption, end-time of consumption, playback information, anonymized data, and non-anonymized data.

A particular entitlement control message relates to a particular content, available at a particular time and valid for a particular duration. It follows that a substantial amount of information about the content consumption is already deducible from the entitlement control message itself. The set-top box may implement further defined messages or hash values related to information that is not directly derivable from the entitlement control message like playback control information (e.g., play, pause, fast-forward, fast reverse, ad skip info etc.) or particular anonymized or non-anonymized data (e.g., meta data associated with the decryption key and/or the hash, in particular securely, cryptographically linked thereto) and may include the same when generating upper level hash values or a top hash value in the course of generating a hash chain, hash list or hash tree.

According to a further embodiment of the present disclosure, the key data may be an entitlement control message of a conditional access system, the method may further comprise processing the key data to obtain control word data as the decryption/descrambling key for decrypting and/or descrambling the media data.

The decryption/descrambling key contained in an entitlement control message may in particular be required for the decryption and/or descrambling of the content data before consumption.

According to a further embodiment of the present disclosure, the media playback device may be arranged to transmit the analytics data and/or the end hash associated with a license renewal request in a conditional access system.

By transmitting the analytics data and/or the end hash with a license renewal request allows the using of an already existent transmission mechanism between the set-top box and the conditional access system had end to transmit the data required for analysis of the media consumption.

According to a further embodiment of the present disclosure, the media provisioning system may comprise information of at least a subgroup of the key data transmitted in a particular time frame and/or the hash information of said transmitted key data, the media provisioning system may be arranged to determine end hash information of a hash chain, hash list or hash tree based on a subset of the key data transmitted, and the media provisioning system may be arranged to compare a determined end hash with an end hash received from a particular media playback device to determine the media data consumption.

In other words, when the media provisioning system is analysing the analytics data, essentially a reverse analysis is performed based on the transmitted analytics data, e.g., a single end hash value. Using knowledge about the relevant entitlement control messages transmitted, their respective hash values and in particular their arrangement within the hash tree, hash list or hash chain, the analytics system or the media provisioning system may determine which entitlement control messages/their hash values were used when generating the end hash value. Determining the plurality of entitlement control messages that were used to generating a particular end hash value in the course of calculating the hash tree, the hash chain or hash list, allows a subsequent analysis of the consumed content.

According to a further embodiment of the present disclosure, the communication element may be arranged to transmit the analytics data and/or the end hash associated with a license renewal request in a conditional access system; and/or wherein each of the plurality of particular decryption/descrambling keys may comprise individual hash information, and wherein the processing element may be adapted to determine from the hash information of at least some of the plurality of particular decryption/descrambling keys, in particular two particular decryption/descrambling keys; and/or wherein the transmitted analytics data may comprise information indicative of at least one transmitted hash information, and wherein the processing element may be adapted to generate the at least one hash information from a plurality of, in particular successive, hash operations on a plurality of particular key data and/or hash information generated from the plurality of particular key data; and/or wherein the key data may be an entitlement control message of a conditional access system, and wherein the processing element may be adapted to process the key data to obtain control word data as the decryption/descrambling key for decrypting and/or descrambling the media data.

### BRIEF DESCRIPTION OF THE DRAWINGS

The present invention will now be described with reference to the accompanying drawings, in which:
Fig. 1 shows an exemplary embodiment of a media provisioning system according to the present disclosure.
Fig. 2 shows an exemplary embodiment of a hash tree according to the present disclosure.
Fig. 3 shows an exemplary embodiment of a method for audience related analytics measurements according to the present disclosure.
Fig. 4 shows an exemplary embodiment of a media playback device according to the present disclosure.

### DETAILED DESCRIPTION

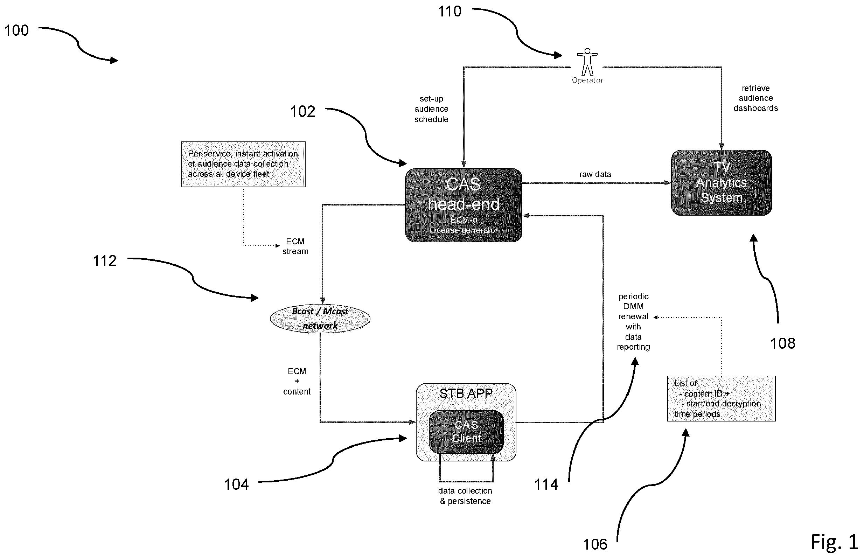

Now referring to Fig. 1, which shows an exemplary embodiment of a media provisioning system according to the present disclosure.

Figure 1 shows a media consumption environment 100 comprising a conditional access system head end 102 which is connected with one exemplary instance of a conditional access system client or set-top box 104. The set-top box 104 may be a generic set-top box adapted to execute a set top box application which in turn provides the functionality for the conditional access system client. The conditional access system head end 102 is communicatively connected with the set-top box 104 via a broadcast/multicast network. The broadcast/multicast network is arranged to transmit 112 content data from the conditional access system head end 102, in particular at least one content storage server associated with the conditional access system head end 102. The content storage server is not specifically depicted in figure 1.

In addition to content data, entitlement control messages are transmitted 112 from the conditional access system head end 102 to the set-top box 104. The entitlement control messages comprise encrypted key data for decrypting the content transmitted by the broadcast/multicast network and received by the set-top box 104. A particular entitlement management message provides decryption information to the set-top box 104 for decrypting the entitlement control messages. This functionality however is not further depicted or described with regard to figure 1.

A particular decrypted key of a particular entitlement control message can only be used for the decryption of a subset of the content data received via the broadcast/multicast network by the set-top box 104. In case of a linear transmission, a particular decryption key may only decrypt a particular current part of the transmitted content data. In the case of a non-linear reproduction of content data, a particular decryption key may decrypt a defined part of the content data making up a particular program, e.g., a complete movie.

The decrypted entitlement control message may be seen as a proof of consumption of a particular part of the received content data by the end user. In other words, since entitlement control messages are only decrypted on demand in order to allow decryption of content data, it is safe to assume that said decrypted content data has been decrypted for the purpose of content consumption. In order to provide analytics data about the content consumption, the set-top box 104 collects information about the decrypted entitlement control messages and uses said information for subsequent data reporting. E.g., it would be conceivable to simply send (information about) all decrypted entitlement control messages to the conditional access system head end 102. The conditional access system head end 102 in turn may use the information to determine that the content corresponding to one of the decrypted entitlement control messages has been consumed. In addition to the entitlement control messages or embedded therein, the conditional access system head end 102 may transmit activation data that triggers/activate or deactivates the data collection and storage in order to allow data reporting on the consumed content.

The analytics data 106, e.g., information about the consumed content like a content ID, the start and end times of the decryption and further data may be transmitted from the set-top box 104 to the conditional access system head end 102 by a back channel. The back channel may be the same channel that is used for periodic license renewal or CAS messages. The data reporting of the analytics data 106 may thus piggyback on the back channel. Simply sending each decrypted entitlement control method potentially would result in a significant amount of data, i.e., a substantial number of decrypted entitlement control messages, which would require transmission from the set-top box to the conditional access system head end 102 via the periodic renewal message channel. This amount of analytics data could potentially require more bandwidth than the renewal channel is offering.

In order to reduce the data required to transmit the analytics data from the set-top box 114 to the conditional access system head end 102, the analytics data 106 is transmitted in a hashed format where the decrypted entitlement control messages are hashed and only the hashes are transmitted. Hash values of decrypted entitlement control messages are potentially much smaller in size and thus require less bandwidth and transmitted data. Additionally, the implementation of a hash chain, hash list or hash tree as described previously and subsequently may further reduce the bandwidth requirement and the transmitted data. The set-top box 104, in particular the conditional access system client 104 executed on the set-top box 104, may collect the data about the specific content consumption, may store the data temporarily and may further process the data to generate the analytics data 106. In particular, the conditional access system client 104 may generate the individual hash values of the decrypted entitlement control messages and may further process those hash values in a hash chain, hash list or hash tree, ultimately obtaining a top hash value, which is then transmitted to the conditional access system head end 102 via license renewal transmission 114.

The conditional access system head end 102 may thus receive the analytics data 106 via the license renewal transmission 114. Since the conditional access system head end 102 has knowledge about all entitlement control messages and their respective hash values, the conditional access system head end 102 can evaluate the provided hash values, in particular a dedicated top hash value, and determine therefrom all the hash values that were used to calculate that particular top hash value. By determining all the relevant hash values, the conditional access system head end 102 may deduce all used entitlement control messages and thus may deduce the consumed content from the totality of the decrypted entitlement control messages.

The conditional access system head end 102 may subsequently provide the analysed data to an analytics system 108, for further high-level analysis or may alternatively provide the raw data, potentially only the top hash value, to the analytics system 108 so that the analytics system 108 itself may determine the plurality of used entitlement control messages as described previously itself. The operator 110 of the media consumption environment exemplarily has access to both the conditional access system head end 102 and the analytics system 108 and thus may obtain information about a particular media consumption. The media consumption environment 100 of figure 1 allows the determination of a general consumption of all users/set-top boxes 104 but also allows the determination of the consumption of a subgroup or even only of a single individual end user/set-top box 104.

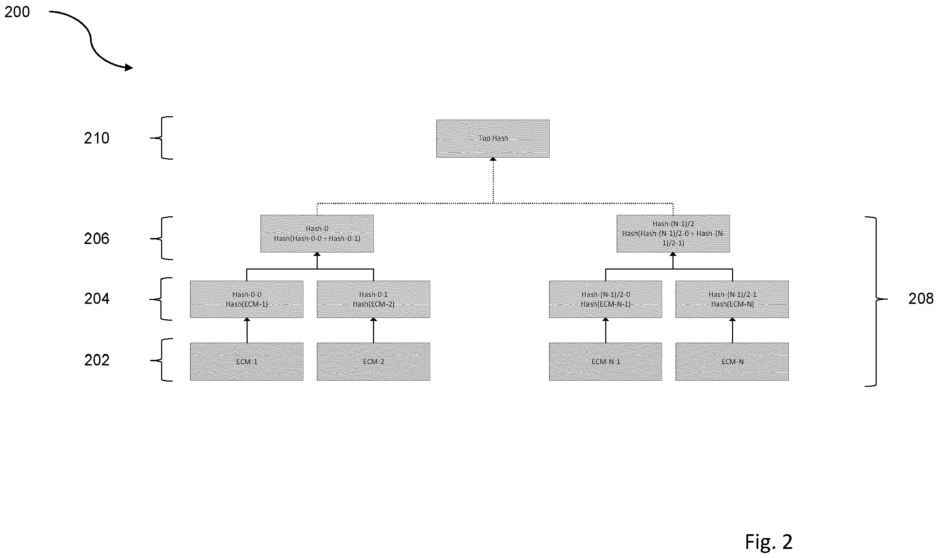

Now referring to Fig. 2, which shows an exemplary embodiment of a hash tree according to the present disclosure.

The hash tree 200 of figure 2 uses a plurality of decrypted entitlement control messages 202, exemplarily depicted as ECM-1 to ECM-N. In a first step, hash values 204 are calculated from the decrypted entitlement control messages 202. This results in N values, HASH(ECM-1) to HASH(ECM-N) values, providing first level hash values 204. Exemplarily two hash values are subsequently combined to form a new hash value, i.e., a hash value of a plurality of hash values of decrypted entitlement control messages, or second level hash values 206. Figure 2 only schematically depicts the further continued combination of hash values by dotted lines. When fully combining the plurality of hash values, by combining pairs of hash lower-level values to obtain single higher level hash values, which in turn may be again combined with further single higher level hash values, the calculation ultimately results in a single top hash value 210. In other words, a plurality of lower order hash values 208 are combined to a single higher order hash value 210, the top hash value 210.

Top hash value 210 may then be transmitted from the set-top box 104 to the conditional access system head end 102, included in license renewal transmission 114. The conditional access system head end 102 or the analytics system 108 comprises information about the individual hash values of the entitlement control messages and may thus do a reverse calculation, i.e., a separation of the top hash value 210 into its individual constituents of individual entitlement control message hashes, which allows the determination which entitlement control messages were decrypted and thus used for content consumption.

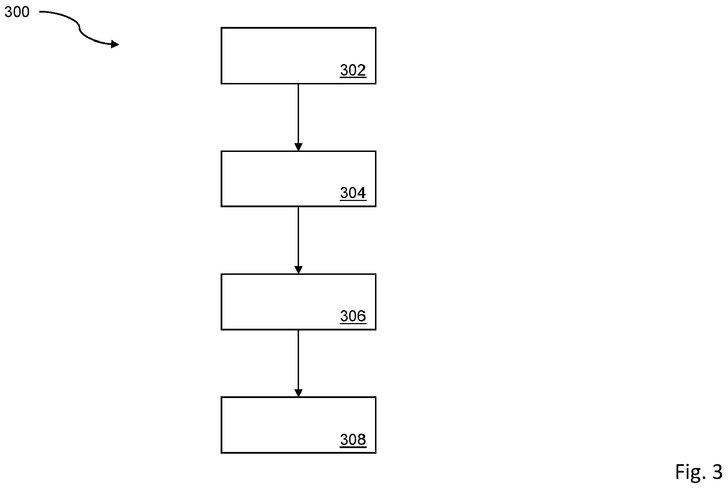

Now referring to Fig. 3, which shows an exemplary embodiment of a method for audience related analytics measurements according to the present disclosure.

The method 300 for audience related analytics measurements in a media consumption environment 100 comprises a media provisioning system 102 and a media playback device 104, the method comprising the steps of receiving 302, by the media playback device 104, encrypted and/or scrambled media data from a media provisioning system 102, receiving 304, by the media playback device 104, key data comprising at least one decryption/descrambling key for decrypting and/or descrambling the media data, wherein the media playback device 104 is processing the key data to obtain the decryption/descrambling key, and wherein the key data is indicative of a particular media data and/or a particular consumption time of media data or a particular media data, generating 306 analytics data 106 related to the processing of the data key on the media playback device 104, transmitting 308 at least part of the analytics data to the media provisioning system 102.

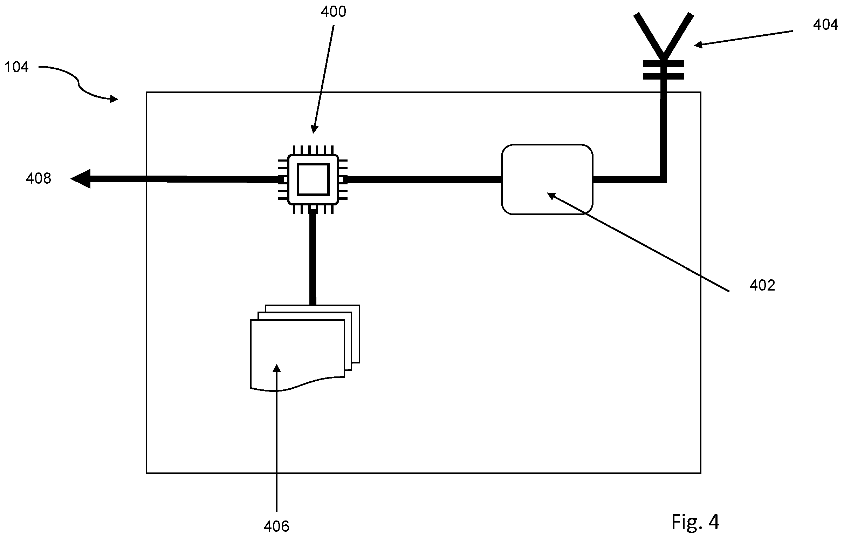

Now referring to Fig. 4, which shows an exemplary embodiment of a media playback device according to the present disclosure.

Fig. 4 shows a media playback device 104 for decoding/descrambling of media data and outputting the decoded/descrambled media data to be consumed by a user. The media playback device 104 comprises a processing element 400, e.g., a microprocessor, connected to a communication element 402 to receive information and data from a media provisioning system, and to transmit information to the media provisioning system. The communication element in Fig. 4 is exemplarily connected to an antenna 404, for wireless communication with other entities like the media provisioning system. It is also conceivable that the communication is conducted by a wired communication connection, e.g., a network connection like ethernet, which however is not depicted in Fig. 4.

Further connected to the processing element 400 is memory 406, which can be a read only memory, a read/write memory like random access memory, HDD, SSD storage or a mixture thereof. The memory may store instructions for data processing and/or may store data to be processed, e.g., may store received media data before and after decoding/descrambling. The memory may also be used for storing hash information of the decryption/descrambling keys and may also store generated hash information, generated in the course of calculating a hash chain, a hash list or a hash tree.

Once the received content data has been decrypted, descrambled or decoded, it may be output for consumption by a user via media data out 408. Said output may be, e.g., a an audio and/or video output like an HDMI connection.

It is to be understood that the invention is not limited to the embodiments described above, and various modifications and improvements may be made without deviating from the concepts described here. Any of the features described above and below may be used separately or in combination with any other features described herein, provided they are not mutually exclusive, and the disclosure extends to and includes all combinations and sub-combinations of one or more features described herein.

Finally, it should be noted that the term *"comprising"* not exclude other elements or steps, and that "*a*" or "*one*" does not exclude the plural. Elements that are described in relation to different types of embodiments can be combined. Reference signs in the claims shall not be construed as limiting the scope of a claim.

### LIST OF REFERENCE NUMERALS

- 100: media consumption environment
- 102: conditional access system head end
- 104: conditional access system client / set-top box / media playback device
- 106: analytics data
- 108: analytics system
- 110: operator
- 112: entitlement control message transmission/encrypted content data transmission
- 114: license renewal transmission

- 200: hash tree
- 202: decrypted entitlement control message
- 204: hash values of entitlement control messages/first level hash values
- 206: hash values of plural hash values of entitlement control messages/second level hash values
- 208: lower order hash values
- 210: top hash value/higher order hash value

- 300: method for audience related analytics measurements
- 302: reiving encrypted and/or scrambled media data
- 304: receiving key data
- 306: generating analytics data
- 308: transmitting analytics data

- 400: processing element
- 402: communication element
- 404: antenna
- 406: memory element
- 408: media data output

## Claims

1. A method (300) for audience related analytics measurements in a media consumption environment (100) comprising a media provisioning system (102) and a media playback device (104),
the method comprising the steps of
receiving (302), by the media playback device (104), encrypted and/or scrambled media data from a media provisioning system (102),
receiving (304), by the media playback device (104), key data comprising at least one decryption/descrambling key for decrypting and/or descrambling the media data,
wherein the media playback device (104) is processing the key data to obtain the decryption/descrambling key, and
wherein the key data is indicative of a particular media data and/or a particular consumption time of a particular media data,
generating (306) analytics data (106) related to the processing of the key data on the media playback device (104),
transmitting (308) at least part of the analytics data to the media provisioning system (102).

2. The method according to the preceding claim,
wherein the key data comprises the at least one decryption/descrambling key and identification data.

3. The method according to at least one of the preceding claims,
wherein the analytics data (106) comprises hash information related to at least one particular decryption/descrambling key, or
wherein the analytics data (106) comprises hash information related to a plurality of particular decryption/descrambling keys.

4. The method according to the preceding claim,
wherein each of the plurality of particular decryption/descrambling keys comprises individual hash information, and
wherein at least one further hash information is determined from the hash information of at least some of the plurality of particular decryption/descrambling keys, in particular two particular decryption/descrambling keys.

5. The method according to the preceding claim,
wherein the transmitted analytics data (106) comprises information indicative of the at least one further hash information.

6. The method according to at least one of the preceding claims,
wherein the transmitted analytics data (106) comprises information indicative of at least one transmitted hash information, and
wherein the at least one hash information is generated from a plurality of, in particular successive, hash operations on a plurality of particular key data and/or hash information generated from the plurality of particular key data.

7. The method according to at least one of the preceding claims,
wherein the transmitted analytics data (106) comprises information indicative of at least one transmitted hash information,
wherein the transmitted hash information is end hash information of a hash chain, hash list or hash tree, and
wherein the nodes of the hash chain, hash list or hash tree are information out of the group consisting of information indicative of particular key data, hash information indicative of particular key data and hash information indicative of particular hash information of a particular plurality of key data.

8. The method according to at least one of the preceding claims,
wherein the analytics data (106) related to the consumption of the media data comprises at least one type of information out of the group of information consisting of media data, media type data, consumed media data, consumed media type data, start-time of consumption, end-time of consumption, playback information, anonymized data, and non-anonymized data.

9. The method according to at least one of the preceding claims,
wherein the key data is an entitlement control message of a conditional access system, the method further comprising
processing the key data to obtain control word data as the decryption/descrambling key for decrypting and/or descrambling the media data.

10. A media playback device (104), comprising
a communication element (402); and
a processing element (400);
wherein the communication element (402) is adapted to receive encrypted and/or scrambled media data from a media provisioning system (102),
wherein the communication element (402) is adapted to receive key data comprising at least one decryption/descrambling key for decrypting and/or descrambling the media data,
wherein the key data is indicative of a particular media data and/or a particular consumption time of a particular media data,
wherein the processing element (400) is adapted to process the key data to obtain the decryption/descrambling key,
wherein the processing element (400) is adapted to generate analytics data (106) related to the processing of the key data on the media playback device (104), and
wherein the communication element (402) is adapted to transmit at least part of the analytics data to the media provisioning system (102).

11. The media playback device according to the preceding claim,
wherein the communication element (402) is arranged to transmit the analytics data and/or the end hash associated with a license renewal request in a conditional access system; and/or
wherein each of the plurality of particular decryption/descrambling keys comprises individual hash information, and
wherein the processing element (400) is adapted to determine from the hash information of at least some of the plurality of particular decryption/descrambling keys, in particular two particular decryption/descrambling keys;
and/or
wherein the transmitted analytics data (106) comprises information indicative of at least one transmitted hash information, and
wherein the processing element (400) is adapted to generate the at least one hash information from a plurality of, in particular successive, hash operations on a plurality of particular key data and/or hash information generated from the plurality of particular key data;
and/or
wherein the key data is an entitlement control message of a conditional access system, and
wherein the processing element (400) is adapted to process the key data to obtain control word data as the decryption/descrambling key for decrypting and/or descrambling the media data.

12. A media provisioning system (100), comprising
a processing element, and
a communication element adapted for communication with a media playback device (104) according to claim 10 or 11,
wherein the media provisioning system (102) is adapted to receive analytics data comprising information indicative of at least one particular decryption/descrambling key used.

13. The media provisioning system according to the preceding claim,
wherein the media provisioning system (102) comprises information of at least a subgroup of the key data transmitted in a particular time frame and/or the hash information of said transmitted key data,
wherein the media provisioning system (102) is arranged to determine end hash information of a hash chain, hash list or hash tree based on a subset of the key data transmitted, and
wherein the media provisioning system is arranged to compare a determined end hash with an end hash received from a particular media playback device to determine the media data consumption.

14. A media data consumption environment (100), comprising
a media playback device (104) according to claim 10 or 11, and
a media provisioning system (102) according to at least one of claims 12 or 13.

15. A computer program product or a computer-readable storage medium comprising instructions which, when executed by a processing element, cause the computer to carry out the method according to at least one of claims 1 to 9.
